# DEMANDE DE BREVET EUROPEEN

(11) **EP 2 202 954 A2**
(43) Date de publication de la demande: **30.06.2010**
(21) Numéro de dépôt: 09180774.3
(22) Date de dépôt: 24.12.2009
(51) Int. Cl.: H04N 1/32

(54) **Procédé de sécurisation d'un envoi de facsimile et dispositif associé**

(30) Priorité: 29.12.2008 FR 0859094
(71) Demandeur: SAGEM COMMUNICATIONS SAS, 92500 Rueil Malmaison (FR)
(72) Inventeur: Lefranc, Pascal, 92500, Rueil-Malmaison (FR)
(74) Mandataire: Camus, Olivier Jean-Claude

(57) **Abrégé**

Dans l'invention, on propose un procédé de sécurisation d'un envoi de documents, notamment de télécopies, sur un réseau de transmission, entre une station émettrice (101) apte à émettre des télécopies, et une station réceptrice (102), apte à recevoir des télécopies, ledit procédé comportant notamment les différentes étapes consistant à :
- émettre, depuis la station émettrice (101), un document (109), vers la station réceptrice (102);
- recevoir le document (109) par la station réceptrice (102) ;

**caractérisé en ce que** le procédé comporte les différentes étapes supplémentaires consistant à :
- détecter (108) une prise de connaissance du document (109) reçu, par un utilisateur de la station réceptrice (102) ;
- émettre (205) depuis la station réceptrice un message (110) d'accusé de prise de connaissance par ledit utilisateur.

## Description

### DOMAINE TECHNIQUE DE L'INVENTION

La présente invention a pour objet un procédé de sécurisation d'un envoi de documents sur un réseau de télécommunication, ou réseau de transmission, notamment de facsimile, ainsi qu'un dispositif apte à mettre en oeuvre un tel procédé. L'invention a essentiellement pour but de sécuriser l'envoi des documents, notamment de type facsimiles, sur un réseau de transmission, la sécurisation de l'envoi désignant ici l'amélioration d'un contexte général en matière de fonctionnement de l'envoi d'un tel fax. Notamment, on cherche dans l'invention, à s'assurer qu'un fax émis a effectivement été pris en considération par un destinataire.

Le domaine de l'invention est, d'une façon générale, celui de la transmission de documents par facsimile. Dans la transmission par facsimile, les données à transmettre sont émises depuis un premier dispositif, ou station, par exemple de type télécopieur ; les données transitent alors sous la forme d'impulsions via une ligne téléphonique, ou une liaison spécialisée, pour être récupérées par un dispositif récepteur, ou station réceptrice, par exemple un autre télécopieur, un ordinateur, un téléphone cellulaire, ou tout autre dispositif apte à recevoir le fax émis. Le dispositif récepteur transforme alors ces impulsions en les transcrivant en mémoire ou sur papier. Le résultat de la transmission s'appelle une télécopie ou, passé dans le langage courant, un fax.

Différents événements se succèdent dans l'envoi de données par un facsimile. Le fonctionnement de ces différents événements est défini dans un protocole particulier, dit protocole T30. Le protocole T30 définit ainsi la succession d'événements se produisant au cours d'une communication et les diverses commandes échangées. Il régit ainsi notamment le fonctionnement des étapes suivantes :
- Echange des numéros de téléphone et des identifiants des stations en présence ;
- Définition des rôles de chacune des stations ;
- Négociation des capacités et des caractéristiques de transmission ;
- Evaluation de la qualité de la ligne et choix d'un débit de transmission convenable ;
- Emission de chaque page, contrôle de qualité par le dispositif récepteur et acquittement ;
- Renégociation éventuelle de vitesse, de mode ou de format entre chaque page ;
- Protocole de rejet et répétition sélective des trames erronées en procédure optionnelle de correction d'erreur (dit mode ECM pour Error Correction Mode en anglais, pour Mode de Correction d'Erreur).

### ARRIERE-PLAN TECHNOLOGIQUE DE L'INVENTION

Désormais, les télécopieurs classiques peuvent être contrôlés depuis des appareils de type ordinateurs personnels ; dans de tels cas de figure, le télécopieur est un périphérique de l'ordinateur considéré, relié à ce dernier par des liaisons filaires ou par des liaisons sans fils. Des logiciels adaptés permettent ainsi une utilisation conviviale des télécopieurs, en offrant notamment la possibilité d'émettre directement des documents, accessibles par l'ordinateur considéré, de type fichiers électroniques par le télécopieur, sans avoir à ouvrir, imprimer, et passer page par page dans le télécopieur considéré ledit document.

Une telle facilité d'utilisation a rendu l'usage des télécopieurs bien plus fréquent qu'avant, pour tout type d'utilisation, notamment certaines utilisations considérées comme sensibles. Ainsi, par exemple, les banques utilisent désormais souvent ce moyen de communication pour communiquer avec leurs clients.

L'utilisation croissante des télécopieurs, éventuellement pilotés depuis des ordinateurs, créée donc des conditions d'utilisation différentes de celles du passé ; une des conséquences est la nécessité d'améliorer la sécurisation de ces transferts de données. Notamment, un besoin essentiel se fait désormais ressentir de s'assurer que le destinataire d'un fax a effectivement pris connaissance du fax considéré. En effet, le fax considéré peut avoir simplement été mémorisé dans une mémoire soit du télécopieur destinataire lui-même, soit par exemple de l'ordinateur régissant le fonctionnement dudit télécopieur, sans pour autant avoir véritablement été pris en connaissance par le destinataire.

### DESCRIPTION GENERALE DE L'INVENTION

Le procédé et le dispositif selon l'invention proposent une solution aux problèmes et inconvénients qui viennent d'être exposés. Dans l'invention, on propose une solution pour que l'expéditeur d'un fax ait une information relative à la prise en considération effective d'un fax envoyé à un destinataire. A cet effet, on prévoit la mise en oeuvre d'applications particulières permettant de détecter l'ouverture et/ou l'impression d'un fichier correspondant au fax envoyé par l'expéditeur. Avantageusement, on sécurise, par exemple en cryptant le fax, la transmission réalisée, afin de s'assurer que la personne prenant connaissance du fax est bien le destinataire escompté.

L'invention concerne donc essentiellement un procédé de sécurisation d'un envoi de documents, notamment de télécopies, sur un réseau de transmission, entre une station émettrice apte à émettre des documents, notamment des télécopies, et une station réceptrice, apte à recevoir des documents, ledit procédé comportant notamment les différentes étapes consistant à :
- émettre, depuis la station émettrice, un document, vers la station réceptrice ;
- recevoir le document par la station réceptrice ;
**caractérisé en ce que** le procédé comporte les différentes étapes supplémentaires consistant à :
- détecter une prise de connaissance, du document reçu, par un utilisateur de la station réceptrice ;
- émettre depuis la station réceptrice un message d'accusé de prise de connaissance par ledit utilisateur.

Le procédé selon l'invention peut comporter, en plus des étapes principales qui viennent d'être mentionnées dans le paragraphe précédent, une ou plusieurs caractéristiques supplémentaires parmi les suivantes:
- préalablement à l'étape d'émission du document, le procédé comporte l'étape consistant à crypter le document à émettre.
- le cryptage réalisé est un cryptage de type RC4.
- l'étape consistant à détecter la prise de connaissance du document reçu comporte une étape de détection de saisie, au niveau de la station réceptrice, d'un mot de passe approprié pour accéder au document reçu.
- le mot de passe saisi est une clé de décryptage adaptée au cryptage du document émis.
- l'étape de détection de prise de connaissance du document reçu comporte une étape de détection d'une opération d'impression dudit document.
- l'étape de détection de prise de connaissance du document reçu comporte une étape de détection d'une opération d'ouverture d'un fichier électronique correspondant audit document.
- le message d'accusé de prise de connaissance est émis vers une station différente de la station émettrice.
- le message d'accusé de prise de connaissance est émis vers la station émettrice.
- l'étape d'émission du document est réalisée dans un mode transparent, notamment dans un mode express.
- l'étape d'émission du document est réalisée dans un mode ECM.

Les différentes caractéristiques supplémentaires du procédé selon l'invention, dans la mesure où elles ne s'excluent pas mutuellement, sont combinées selon toutes les possibilités d'association pour aboutir à différents exemples de mise en oeuvre de l'invention.

La présente invention se rapporte également à un dispositif apte à mettre en oeuvre le procédé selon l'invention **caractérisé en ce qu**'il comporte :
- une station émettrice apte à émettre un document sur un réseau de transmission ;
- une station réceptrice apte à recevoir ledit document ;
- au sein de la station réceptrice, des moyens de détection d'une prise de connaissance du document reçu par un utilisateur de ladite station réceptrice ;
- au sein de la station réceptrice, des moyens d'émission d'un message d'accusé de prise de connaissance par ledit utilisateur.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif, et nullement limitatif de la portée de l'objet de la présente invention. Les figures montrent :
- Figure 1 : un exemple de dispositif selon l'invention ;
- Figure 2 : un exemple de mise en oeuvre du procédé selon l'invention.

### DESCRIPTION DES FORMES DE REALISATION PREFEREES DE L'INVENTION

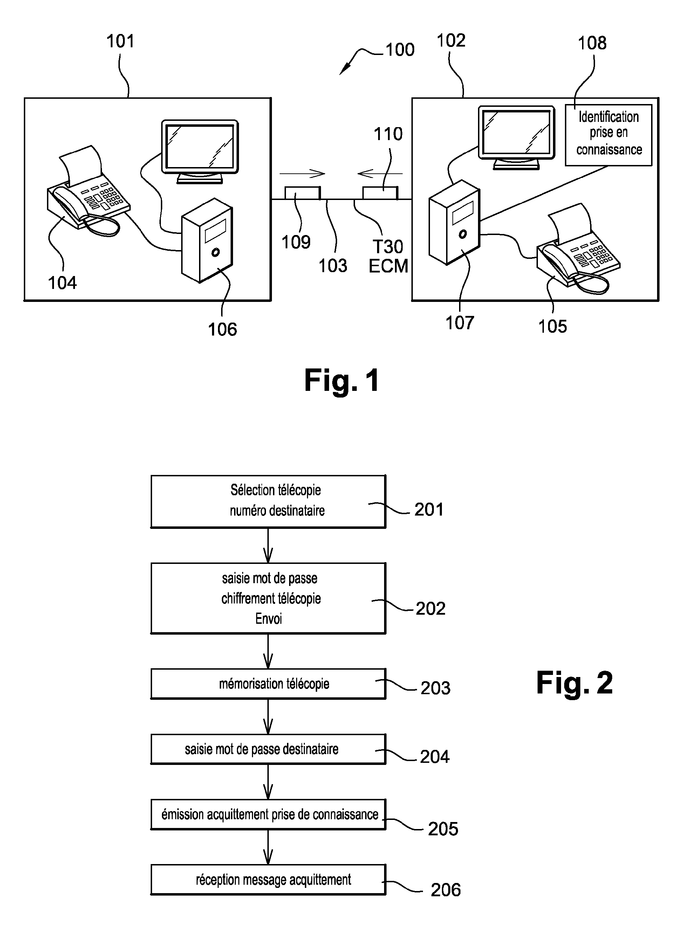

La figure 1, unique, montre un dispositif 100 selon l'invention.

Le dispositif 100 comporte essentiellement une station émettrice 101 de documents, notamment de télécopies, et une station réceptrice 102 de télécopies. Les deux stations 101 et 102 sont reliées par des moyens de communication classique 103. Les deux stations sont ainsi aptes à échanger des informations sous la forme de télécopie, en respectant les protocoles habituels d'échange pour ce type de communication, notamment le protocole T30.

Chacune des stations 101 et 102 peut par exemple comporter un télécopieur 104, respectivement 105, et un ordinateur 106, respectivement 107. Dans d'autres exemples de mise en oeuvre, les stations peuvent se limiter à des télécopieurs présentant avantageusement un écran d'affichage apte à afficher un certain nombre d'informations. Les ordinateurs 106 et 107 sont équipés d'applications logicielles qui permettent une utilisation conviviale des télécopieurs qui leur sont associés.

Un exemple de mise en oeuvre du procédé selon l'invention est à présent décrit :

Dans une première étape 201, sur l'ordinateur 106 de la station émettrice 101, on procède à l'ouverture d'une fenêtre d'émission qui permet de parcourir un disque dur de l'ordinateur, et de sélectionner ainsi un fichier électronique à transmettre en tant que télécopie 109. Dans cette étape, on procède également à la saisie du numéro de la station destinataire.

Dans une étape suivante 202, toujours sur l'ordinateur 106, on procède à la saisie d'un mot de passe. Le mot de passe est avantageusement utilisé comme clé de chiffrement pour réaliser un cryptage, par exemple selon l'algorithme de chiffrement R64, de la télécopie à envoyer. On obtient alors une télécopie sécurisée. Le mot de passe utilisé est communiqué au destinataire de la télécopie selon des moyens choisis par l'émetteur de la télécopie. L'expéditeur peut avantageusement suivre l'évolution de l'envoi de sa télécopie, avec par exemple la présentation d'une file d'attente des télécopies en cours d'émission, et une fois que la télécopie est envoyée, la présentation d'une fenêtre dite fenêtre de mémoire d'émission, rappelant les différentes télécopies qui ont été envoyées. Avantageusement, on prévoit d'associer chaque télécopie envoyée à un signe distinctif, par exemple un code de couleur, permettant d'identifier aisément si la télécopie considérée a été prise en connaissance par le destinataire.

L'envoi est assuré selon les spécifications du protocole T30, avantageusement selon le mode express, mode particulier du mode transparent, tous deux définis dans le protocole T30. Le choix de tels modes de transmission permet d'ajouter une information à la télécopie envoyée pour indiquer que ladite télécopie est une télécopie sécurisée. Avantageusement, le mode d'envoi choisi est le mode ECM ; ainsi, on offre la certitude que la télécopie est correctement émise, et qu'elle pourra effectivement être lue par le destinataire.

Dans une étape suivante 203, la télécopie 109 est mémorisée dans l'ordinateur 107 de la station réceptrice 102 ; le destinataire prend connaissance, dans une fenêtre d'affichage, de la réception de la télécopie 109. Un indicateur visuel lui indique si la télécopie reçue est une télécopie sécurisée ou non.

Dans l'affirmative, dans une étape suivante 204, le destinataire saisit le mot de passe qui lui a été préalablement communiqué afin de décrypter la télécopie sécurisée et confidentielle, dans la mesure où elle lui est destinée et que seul le porteur du mot de passe est apte à la déchiffrer.

Dans une étape suivante 205, la station réceptrice 102 émet un message d'acquittement 110 de prise de connaissance de la télécopie. Le message d'acquittement de prise de connaissance de télécopie peut, en fonction du mode de mise en oeuvre retenu, faire suite soit, les trois conditions suivantes n'étant pas exclusives :
- à la saisie du mot de passe lors de l'étape 204 ;
- à l'ouverture du fichier correspondant à la télécopie reçue ;
- à l'impression du contenu de la télécopie reçue.

Dans l'invention, la station 102 comporte ainsi des moyens 108 d'identification d'une des trois conditions qui viennent d'être mentionnées. Ces moyens sont avantageusement intégrés dans l'ordinateur 107.

Dans une étape suivante 206, la station émettrice 101 reçoit le message d'acquittement, et met avantageusement à jour une base de données relative à la prise en connaissance, par le destinataire, des télécopies envoyées. Dans une variante de l'invention, le message d'acquittement est envoyé uniquement ou en doublon vers un terminal tiers assurant la gestion de la base de données relative à la prise en connaissance, par le destinataire, des télécopies envoyées.

## Revendications

1. Procédé de sécurisation d'un envoi de documents, notamment de télécopies, sur un réseau de transmission, entre une station émettrice (101) apte à émettre des télécopies, et une station réceptrice (102), apte à recevoir des télécopies, ledit procédé comportant notamment les différentes étapes consistant à :
- émettre, depuis la station émettrice (101), un document (109), vers la station réceptrice (102);
- recevoir le document (109) par la station réceptrice (102) ;
**caractérisé en ce que** le procédé comporte les différentes étapes supplémentaires consistant à :
- détecter (108) une prise de connaissance du document (109) reçu, par un utilisateur de la station réceptrice (102) ;
- émettre (205) depuis la station réceptrice un message (110) d'accusé de prise de connaissance par ledit utilisateur.

2. Procédé selon la revendication précédente **caractérisé en ce qu'**il comporte l'étape supplémentaire consistant à, préalablement à l'étape d'émission du document (109), crypter le document à émettre.

3. Procédé selon la revendication précédente **caractérisé en ce que** le cryptage réalisé est un cryptage de type RC4.

4. Procédé selon l'une au moins des revendications précédentes **caractérisé en ce que** l'étape consistant à détecter la prise de connaissance du document reçu comporte une étape (204) de détection de saisie, au niveau de la station réceptrice, d'un mot de passe approprié pour accéder au document reçu.

5. Procédé selon la revendication précédente et selon la revendication 2 **caractérisé en ce que** le mot de passe saisi est une clé de décryptage adaptée au cryptage du document émis.

6. Procédé selon l'une au moins des revendications précédentes **caractérisé en ce que** l'étape de détection de prise de connaissance du document reçu comporte une étape de détection d'une opération d'impression dudit document.

7. Procédé selon l'une au moins des revendications précédentes **caractérisé en ce que** l'étape de détection de prise de connaissance du document reçu comporte une étape de détection d'une opération d'ouverture d'un fichier électronique correspondant audit document.

8. Procédé selon l'une au moins des revendications précédentes **caractérisé en ce que** le message (110) d'accusé de prise de connaissance est émis vers une station différente de la station émettrice (101).

9. Procédé selon l'une au moins des revendications 1 à 7 **caractérisé en ce que** le message d'accusé de prise de connaissance est émis vers la station émettrice (101).

10. Procédé selon l'une au moins des revendications précédentes **caractérisé en ce que** l'étape d'émission du document est réalisée dans un mode transparent, notamment dans un mode express.

11. Procédé selon l'une au moins des revendications précédentes **caractérisé en ce que** l'étape d'émission du document (109) est réalisée dans un mode ECM.

12. Dispositif (100) apte à mettre en oeuvre le procédé selon l'une au moins des revendications précédentes **caractérisé en ce qu'**il comporte :
- une station émettrice (101) apte à émettre un document sur un réseau de transmission (109) ;
- une station réceptrice (102) apte à recevoir ledit document (109);
- au sein de la station réceptrice (101), des moyens de détection (108) d'une prise de connaissance du document reçu par un utilisateur de ladite station réceptrice ;
- au sein de la station réceptrice, des moyens d'émission d'un message (110) d'accusé de prise de connaissance par ledit utilisateur.
